# EUROPEAN PATENT APPLICATION

(11) **EP 2 876 968 A1**
(43) Date of publication of application: **27.05.2015**
(21) Application number: 14187689.6
(22) Date of filing: 06.10.2014
(51) Int. Cl.: H04W 76/04

(54) **A method and apparatus for performing discontinuous reception**

(30) Priority: 09.10.2013 US 201361888913 P
(71) Applicant: Nokia Corporation, 02610 Espoo (FI)
(72) Inventor: Dalsgaard, Lars, 90230 Oulu (FI); Lunden, Petteri, 02230 Espoo (FI); Virtej, Elena, 02100 Espoo (FI); Malkamäki, Esa, 02130 Espoo (FI)
(74) Representative: Nokia Corporation

(57) **Abstract**

A method and apparatus can be configured to perform discontinuous monitoring of a macro cell/MeNB. The method can also include performing monitoring of a small cell/SeNB. The monitoring of the macro cell/MeNB and the monitoring of the small cell/SeNB are performed using a time-division-multiplexing pattern. The monitoring of the macro cell/MeNB has higher priority over the monitoring of the small cell/SeNB.

## Description

### BACKGROUND:

### Field:

Embodiments of the invention relate to a method and an apparatus for performing discontinuous reception.

### Description of the Related Art:

Long-term Evolution (LTE) is a standard for wireless communication that seeks to provide improved speed and capacity for wireless communications by using new modulation/signal processing techniques. The standard was proposed by the 3^{rd} Generation Partnership Project (3GPP), and is based upon previous network technologies. Since its inception, LTE has seen extensive deployment in a wide variety of contexts involving the communication of data.

### BRIEF DESCRIPTION OF THE DRAWINGS:

For proper understanding of the invention, reference should be made to the accompanying drawings, wherein:
   Fig. 1 illustrates a configuration that uses a Time-Division-Multiplexing-based (TDM-based) approach in accordance with embodiments of the invention.
   Fig. 2 illustrates an example of mobility in accordance with embodiments of the invention.
   Fig. 3 illustrates the use of TDM patterns in accordance with embodiments of the invention.
   Fig. 4 illustrates a flowchart of a method in accordance with embodiments of the invention.
   Fig. 5 illustrates a flowchart of a method in accordance with embodiments of the invention.
   Fig. 6 illustrates an apparatus in accordance with embodiments of the invention.
   Fig. 7 illustrates an apparatus in accordance with embodiments of the invention.
   Fig. 8 illustrates an apparatus in accordance with embodiments of the invention.

### DETAILED DESCRIPTION:

Embodiments of the present invention are directed to Evolved-Universal-Terrestrial-Radio-Access Network (E-UTRAN) small-cell enhancements. The small-cell enhancements can be applied to user equipment (UE) that are not capable of carrier aggregation. UE-mobility functionality can include the performing of cell detection, the collecting of measurements, the performing of evaluations, and the performing of different types of reporting. Embodiments of the present invention can provide robust mobility for single carrier UEs in Dual-Carrier deployments with optimal opportunities for offloading.

A heterogeneous network may include one or more wireless access points, or base stations, such as, for example, a E-UTRAN Node B base station serving macro cells, and one or more small cell base stations serving small cells. For example, a small cell base station (or a wireless access point or a remote radio head, for example) may be implemented to cover a small cell, or a coverage area, examples of which include a residence, a small business, a building, an office, or a small area. The small cell base station (for example, a home base station (HNB), a home E-UTRAN NodeB base station (HeNB), a WiFi access point, and the like) may be configured to have some of the functionality found in a typical base station, such as, for example, an E-UTRAN NodeB (eNB) base station, but the small cell base station may have less/smaller coverage/range and lower power capabilities given its limited coverage area or class. Furthermore, a small cell base station may have limited (or non-ideal) backhaul connection that may have higher latency or lower throughput than macro cell base stations. This limited backhaul connection may affect communication between the small cell base station and other base stations and other network elements or nodes. A user equipment may act as an access point or a base station for other devices (multiple devices, or part of device to device communication or group communication), so that in some cases, also, a user equipment could be considered as a limited capability base station or small cell. For example, the small cell base station may be implemented as a femtocell wireless access point/base station having power sufficient for a cell serving wireless devices within a limited range of about tens of meters. Picocell base stations are another example of a small cell base station, but picocell base stations have somewhat greater range, serving a small area on the order of about 100-200 meters. The small cell base station may be implemented as a secondary base station, for example, as a secondary cell (SCell) eNB in carrier aggregation. It may also be called a secondary eNB (SeNB). Accordingly, wireless service providers view small cell base stations as a way to extend service coverage into a small cell, as a way to offload traffic to the small cell base stations, and/or as a way to provide enhanced service, such as, for example, higher data rates, lower latencies, energy efficiency and the like, within the small cell, when compared to the larger macro cell served by a typical base station, such as, for example, the eNB base station. The macro cell base station may be also implemented as a primary base station, for example, as a primary cell (PCell) eNB in carrier aggregation and may also be called a master eNB (MeNB).

Even though embodiments of the present invention can be applied to a macro cell (or MeNB) and/or a small cell (or SeNB), other embodiments can apply to other cell sizes or types as well. As well, it may be applied to other RATs (Radio access Technology). In addition, embodiments of the invention could be applied to at least in part to UE's D2D connection, e.g., UE's connection to NW could be master and D2D connection would be the secondary or vice-versa. Mobility of user equipment (UE) in heterogeneous-network (HetNet) deployments can be challenging in some cases. In particular, the management of a UE's outbound mobility from a small-cell can be challenging. While a UE is mobile in a heterogeneous network, it is desirable to ensure that the UE can provide a proper user experience and can provide proper throughput (TP).

In the future, the quantity of overall wireless-data transmissions is expected to substantially increase. One way to service this increased quantity of wireless transmissions is to increase the deployment of small cells.

However, as described above, when a UE is moving outbound from a small cell, managing the outbound mobility of the UE can be challenging. Managing small-cell outbound mobility is a challenge when the small cells are deployed on a carrier other than a macro carrier.

One previous approach of effectively using small cells is to use the carrier aggregation (CA) feature as already defined in 3GPP Release 10. Although this approach is a feasible approach, this approach is not applicable in circumstances where UEs are not CA-capable UEs.

Further, with the previous approaches, discontinuous reception (DRX) rules are defined in 3GPP Technical Specification (TS) 36.321. DRX configuration is specified in 3GPP TS 36.331. Performance requirements are listed in 3GPP TS 36.133. The previous approaches are silent with regard to providing TDM DRX for non-CA capable UEs.

In view of the above, there exists a need to allow both UEs that are capable of CA and UEs that are incapable of CA to effectively use small cells. Non-CA capable UEs can be UEs that do not have two receivers/transmitters. One approach for allowing both UEs that are capable of CA and UEs that are incapable of CA to both effectively use small cells is to apply a time-division-multiplexing-based (TDM-based) approach. In this TDM-based approach, the UE (while being in the small cell) is configured to maintain a connection with the macro cell. Specifically, the macro cell can maintain the UE connection while the UE is being served by the small cell.

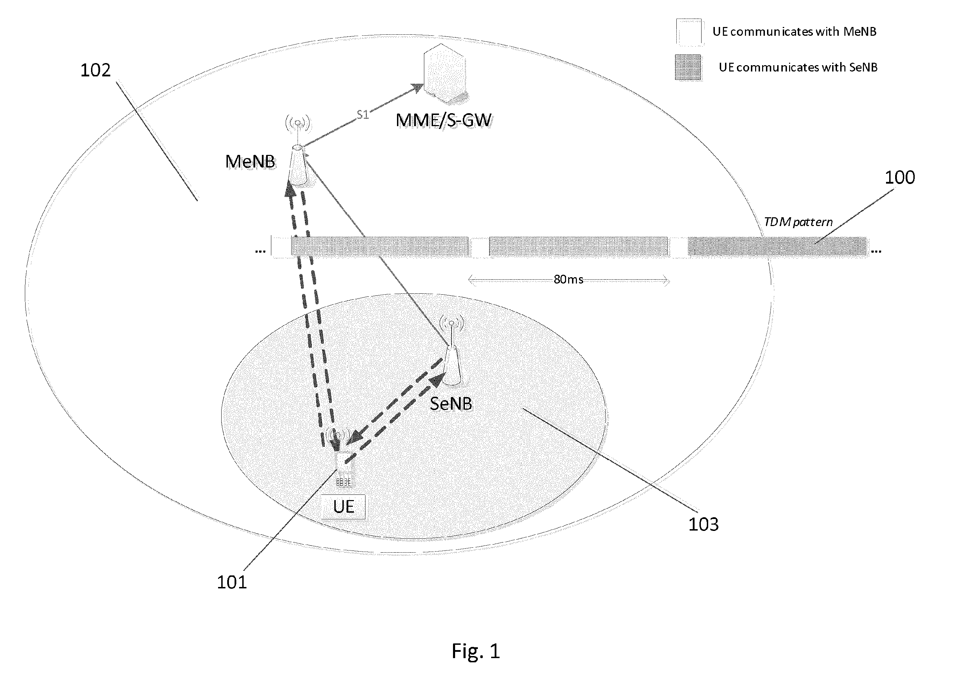

Fig. 1 illustrates a configuration that uses a TDM-based approach in accordance with embodiments of the invention. Fig. 1 illustrates a mechanism of using a TDM pattern 100 to allow the UE 101 to know when to listen to a macro cell 102 and when to listen to a small cell 103. For example, the TDM pattern between the macro cell 102 and the small cell 103 can be configured such that the UE 101 receives from the macro cell 102 for 6 ms out of every 80 ms or so. Although the UE 101 can receive from the macro cell 102 for 6 ms, other embodiments can use other patterns.

One example of a TDM-based approach is to use the macro cell to exchange control data, while the small cell can be used to exchange user data. For example, the macro cell can be used to exchange mobility control information, such as measurement reports, handover commands, etc.

If bearer splitting is supported, a network can be more flexible regarding in which cell the network schedules the UE, but the macro-cell connection can still act as a "backup" if the small-cell connection fails for some reason. Bearer splitting means that an EPS bearer can be routed via more than one eNB, typically MeNB and SeNB in dual connectivity. This is similar to Release 10/11 carrier aggregation, where one bearer can be scheduled via multiple cells. In carrier aggregation, the two or more cells are served by the same eNB, whereas in dual connectivity, at least some of the cells are served by another eNB. Therefore, the macro layer can offer similar mobility robustness regardless of the type of cell that the UE is using to exchange data.

The TDM pattern shown in Fig. 1 can be seen as a gap pattern from a small cell point of view. The UE can have time gaps in its connection to the small cell. During these small time gaps, the UE is able to measure and monitor the macro cell while being served by the small cell. In other words, the UE will monitor and measure the macro cell during the defined gaps. The pattern of the time gaps can be similar to existing gap patterns defined for inter-frequency/Radio-Access-Technology measurements, for example. One advantage of describing the TDM pattern as gap pattern, from a small cell point of view, is that procedures and requirements defined for measurement gaps can be reused. As an example, of 6 ms gap, a UE may need (or is allowed) 1 ms for switching between frequencies, leaving 5 ms for measurements. Thus, the UE may measure on an MeNB carrier and monitor the PDCCH of MeNB for less than the entire 6 ms gap, for example. The UE may also monitor (or be required to monitor) the MeNB PDCCH for a shorter time than it measures on MeNB carrier, e.g., 2 ms, which could be towards the end of the gap. This can allow the UE more time switching and tuning the receiver before it needs to start monitoring PDCCH. This could mean that the DRX "onDuration" in MeNB is shorter than the TDM gap and may have a different start offset than the gap. The DRX cycle of the UE in MeNB may also be configured longer than the TDM gap (or a measurement gap if used for this purpose) in SeNB so that UE monitors PDCCH of MeNB, e.g., every second gap instead of every gap. This can enable the UE to measure more frequently than it needs to monitor MeNB PDCCH, or allow the UE to measure also other frequencies than the MeNB frequency. The numbers given here are one example, different patterns and requirements may be used as well.

A difficulty arises when the UE is served on the small cell, while activity starts on the macro cell. One example of activity on the macro cell includes a triggering of a macro-cell change. If the UE measures and follows the macro cell, the macro-cell event triggers a measurement report which is sent (by the UE) to the macro cell (via control signaling).

At the time activity occurs on the macro cell, if the UE is constrained to use the given gap pattern to perform data exchange with the macro cell, at least some signaling will be adversely affected and at least Hybrid-Automatic-Repeat-Request (HARQ) (as currently defined) will not operate properly. Further, by restricting the scheduling points in the MeNB to the defined gaps (by restricting the scheduling points to occur every 80 ms), the robustness of the mobility on the macro will be impacted. This will generally delay the mobility signaling. Such a delay will potentially lead to reduced mobility robustness in the form of increased Handover failures (HOFs) and radio link failures (RLFs).

In embodiments of the present invention, a UE can be configured to monitor a macro cell in connection with dual connectivity. Signaling can be initiated in the macro cell. The DRX of the macro cell (or a serving cell served by a master evolved node B (MeNB)) takes priority over monitoring activity in a small cell or a serving cell served by secondary evolved node B (SeNB). For example, data/control transmissions of the MeNB can be assigned higher priority over the transmissions of the SeNB.

As such, the monitoring and the scheduling on the macro cell has a higher priority than the monitoring of activity occurring with the small cell. One way to implement such functionality is to define the DRX activity of the macro cell as taking priority over the DRX activity of the small cell.

Embodiments of the present invention can be implemented in a variety of ways. Two different examples of implementing the embodiments are described below. However, other embodiments are not to be limited by the examples described below.

In one embodiment, existing DRX rules and timers, as specified in TS 36.321, can be used. The DRX pattern of a macro cell (i.e., the DRX pattern between the UE and the MeNB) can be configured according to a gap pattern of the aforementioned TDM pattern. For example, the DRX onDuration can be configured to be 5ms, and the DRX cycle 80 ms, and the drxStartOffset such that the MeNB onDuration coincides with the TDM gap of SeNB. Specifically, the UE can receive the DCI of the macro cell during the gap portions of the gap pattern. At this time, the UE monitors/measures macro-cell operation. Once the UE is scheduled in the macro cell (during the on-duration, but not necessarily limited to the on-duration), the UE starts a DRX inactivity timer. As long as the DRX inactivity timer is running, the UE continues to monitor/measure the macro cell. For example, the UE can monitor the macro cell's DCI (downlink control information) for scheduling occasions and for performing measurements. When the inactivity timer expires (potentially including related pending Hybrid-Automatic-Repeat-Request (HARQ) retransmissions as specified in TS 36.321), the UE returns to normal behavior, which can include returning to monitor/measure the SeNB (small-cell). In some example embodiments, the UE's DRX onDuration in MeNB may be configured to coincide with the TDM gap of SeNB, but have a shorter duration, e.g., 2 ms out of 5 ms, and/or the MeNB DRX cycle may be longer than a TDM gap periodicity. In some example embodiments, the SeNB does not configure the UE with a TDM gap pattern, but, instead, there is an implicit TDM pattern as the MeNB DRX (or master DRX) has priority over SeNB.

A UE can be configured with a master DRX, and can also be optionally configured with a secondary DRX. The UE can apply the master DRX configuration for the MeNB, and the UE can apply the secondary DRX configuration for the SeNB. If the UE is in Active Time in the MeNB (according to the master DRX, for example), the UE can monitor the Physical-Downlink-Control-Channel (PDCCH) transmitted from the MeNB. Otherwise, the UE can monitor the PDCCH transmitted from the SeNB, according to the secondary DRX (if the UE is configured to do so). Some additional time may be allowed for the UE to switch from monitoring/measuring the MeNB to monitoring/measuring the SeNB and vice versa. Essentially, the SeNB can have another DRX pattern, but that DRX pattern may be overridden by the MeNB DRX. If the UE is not in Active Time in either the MeNB or SeNB, the UE has a DRX opportunity (and may omit receiving any PDCCH and, for example, can turn the receiver's power off). As an example, the UE can be primarily served by the SeNB, and the UE can receive communication from the MeNB, for example, 6 subframes out of every 80 subframes. Besides measurements, the UE can receive the PDCCH. The UE can monitor DCI information.

In the event that the UE is scheduled by the MeNB during the Active Time of the Master DRX pattern of MeNB (as dependent upon an DRX inactivity timer, DRX retransmission timer, etc.), the UE generally would continue listening to the MeNB longer than the 6 subframe gap, until the MeNB stops transmitting. This allows a network to start scheduling a UE basically anytime (taking the DRX pattern into account) from the MeNB so that it can receive, for example, potentially important control signaling (such as a handover (HO) command, for example).

Another way to implement an embodiment of the present invention is to define new specific timers related to how long of a time the UE should monitor/measure the macro cell or MeNB when scheduling on the macro cell or MeNB occurs. The timer can be of a configurable length. Every time the scheduling occurs, the timer can be restarted. In one embodiment, the timer runs from the end of a last scheduling occurence and for a given period of time.

After no longer being required to perform macro-cell monitoring, according to this priority rule, the UE returns to a former behavior, which could correspond to the monitoring/measuring of a small cell or the UE could be staying in a macro cell.

The UE may be configured to signal the SeNB when the UE returns to the SeNB from the macro cell, every time or when it exceeded the duration of the gap pattern or when the DRX in MeNB was extended, e.g., because DRX inactivity timer was started. The UE may also be aware that the UE is going to send a measurement report (or scheduling request or other transmission) to the macro cell while still monitoring the small cell. In an embodiment, the UE may indicate the small cell of this beforehand so that small cell could suspend scheduling of the UE until it returns to small cell.

Embodiments of the present invention can increase control signaling robustness. Embodiments of the present invention can also ensure robust mobility. Embodiments of the present invention can also reduce signaling delay. With embodiments of the present invention, there may be no need to change macro-cell behavior related to signaling and scheduling.

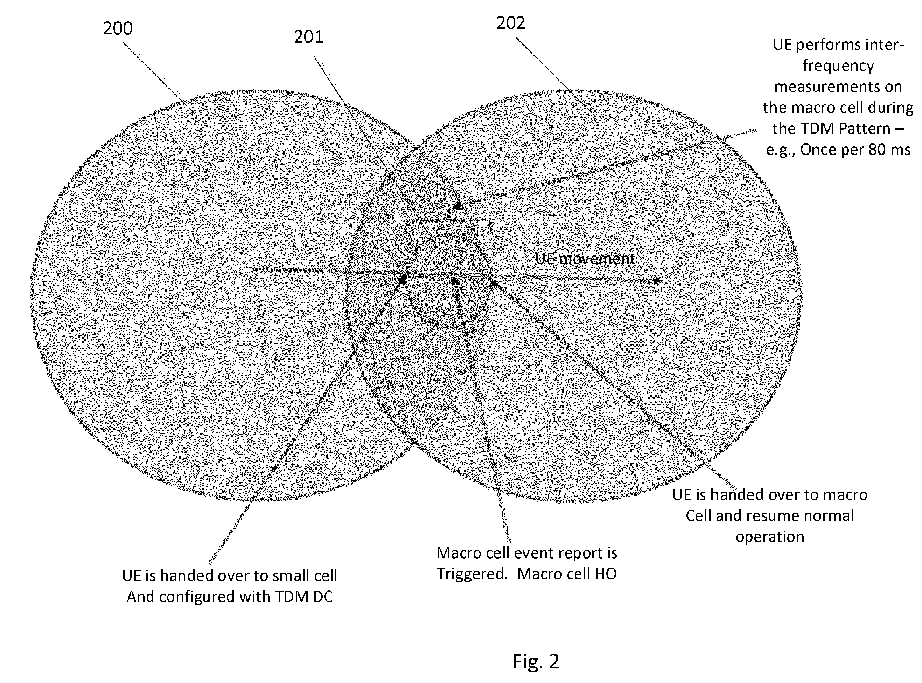

Fig. 2 illustrates an example of mobility in accordance with embodiments of the invention. Referring to Fig. 2, a UE can move through macro cell 200, small cell 201, and macro cell 202. As the UE moves into small cell 201, the UE can be configured with small cell SeNB 201. The UE can be configured with TDM dual connectivity (DC). While the UE is in small cell 201 connected to both SeNB and MeNB, receiving data from SeNB and monitoring MeNB, a macro cell measurement event report can be triggered (for instance, another macro cell becomes better than current macro cell). For example, a macro-cell handover can occur. Once the UE exits small cell 201 into macro cell 202, the UE can be handed over to macro cell 202. The UE can then resume a normal operation.

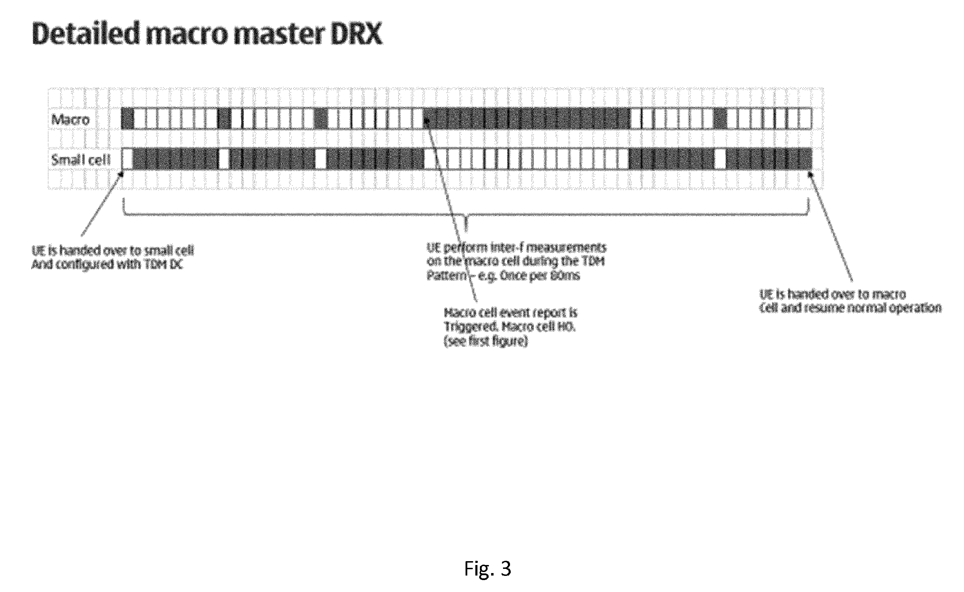

Fig. 3 illustrates the use of TDM patterns in accordance with embodiments of the invention. Fig. 3 illustrates the TDM patterns which are used by embodiments of the present invention as a UE moves between macro cells and a small cell (as previously described in reference to Fig. 2). Referring to Fig. 3, a UE can enter a small cell. At such time, the UE is configured with the small cell (SeNB) and be configured with TDM dual connectivity. As described above, while the UE is within the small cell, a macro cell event report can be triggered. The UE eventually arrives in a second macro cell, as described above. The UE can be handed over to the second macro cell and may be called to resume a normal operation, i.e., the SeNB configuration is removed. Referring to Fig. 3, the portions of time corresponding to the darker color are the times when the UE is measuring/monitoring the given eNB.

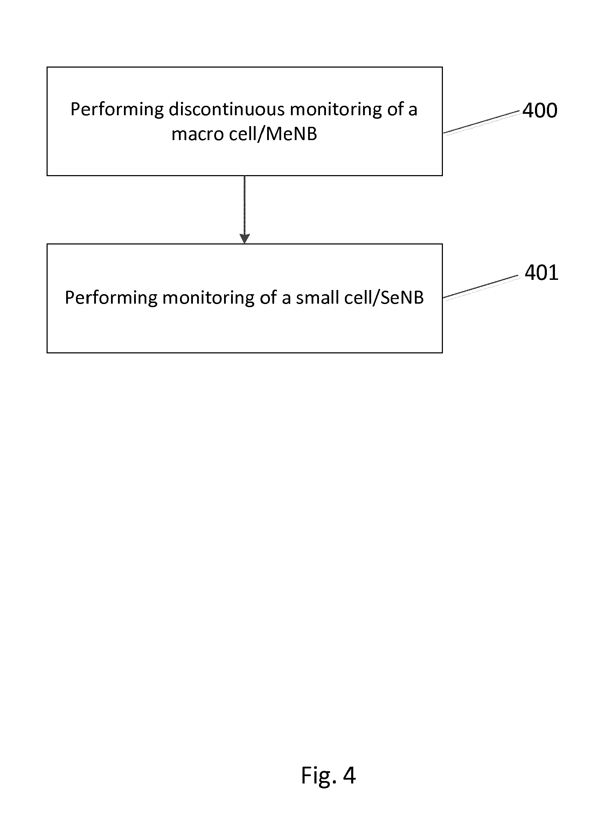

Fig. 4 illustrates a flowchart of a method in accordance with embodiments of the invention. The method illustrated in Fig. 4 includes, at 400, performing discontinuous monitoring of a macro cell/MeNB. The method, at 401, also includes performing monitoring of a small cell/SeNB. The monitoring of the macro cell/MeNB and the monitoring of the small cell/SeNB are performed using a time-division-multiplexing pattern. The monitoring of the macro cell/MeNB has higher priority over the monitoring of the small cell/SeNB. As an example, both DRX operations can be assumed to follow the existing DRX operation as specified in TS 36.321. With embodiments of the present invention, when the UE is configured with TDM dual connectivity, the UE follows DRX active time in SeNB and monitors SeNB according to a secondary DRX pattern, except for TDM gaps during which the UE monitors MeNB. The master DRX pattern is aligned with the TDM gaps such that master DRX onDuration coincides with the TDM gaps. When MeNB schedules something to the UE during the Master DRX onDuration (or equivalently during the TDM gap), a Master DRX inactivity timer is started and the UE stays monitoring the MeNB and receiving from MeNB. Thus, by indicating that master DRX has higher priority, it is meant that UE follows primarily the master DRX Active Time, i.e., every time the UE is in DRX Active Time in MeNB, the UE monitors MeNB and only if the UE is not in Active Time, according to master DRX, the UE may monitor SeNB (according to secondary DRX configured for SeNB). During TDM dual connectivity, the UE mostly monitors SeNB since the master DRX Active Time (Long DRX onDuration) coincides with the TDM gaps.

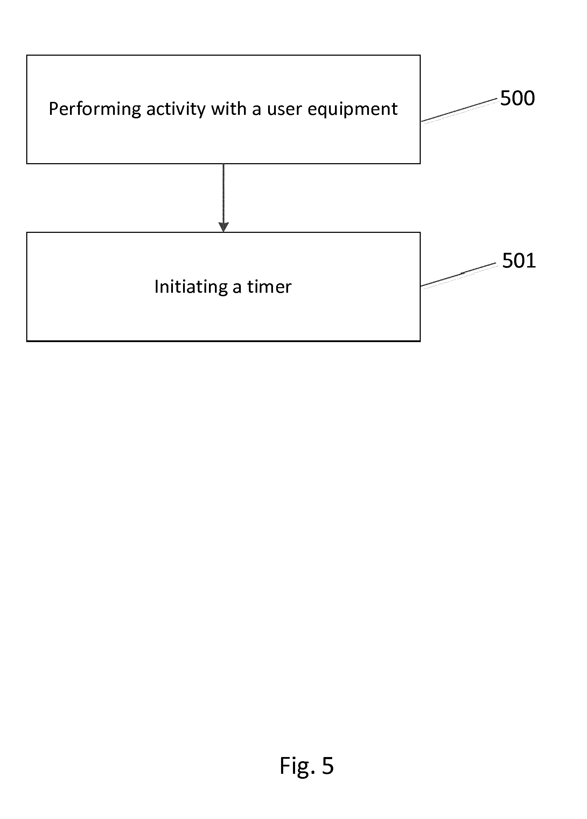

Fig. 5 illustrates a flowchart of a method in accordance with embodiments of the invention. The method illustrated in Fig. 5 includes, at 500, performing, by a network node, activity with a user equipment. The activity with the user equipment is performed using a time-division-multiplexing pattern. The method also includes, at 501, initiating a timer. The user equipment monitors a macro cell/MeNB while the timer is running.

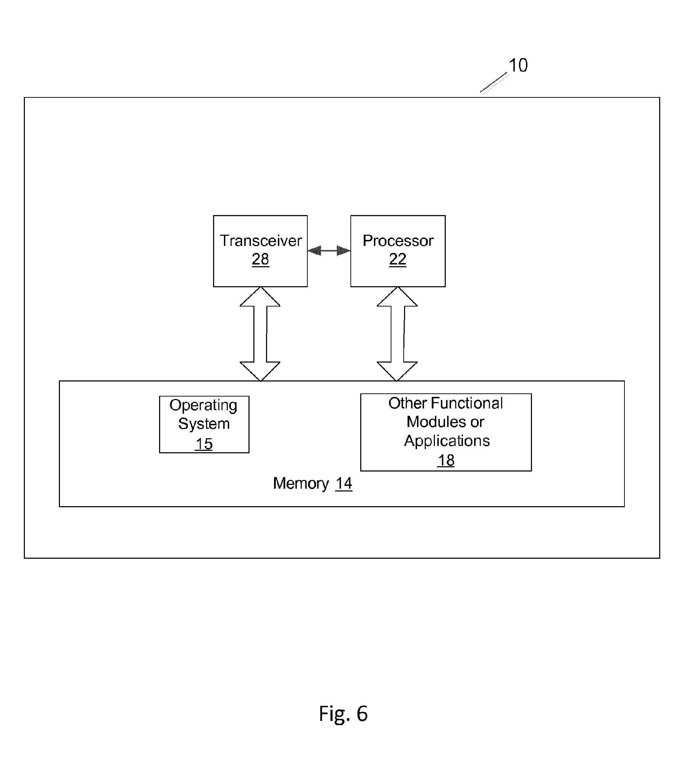

Fig. 6 illustrates an apparatus in accordance with embodiments of the invention. In one embodiment, the apparatus can be a user device. In another embodiment, the apparatus can be a network node, such as a base station or an evolved Node B, for example. Apparatus 10 can include a processor 22 for processing information and executing instructions or operations. Processor 22 can be any type of general or specific purpose processor. While a single processor 22 is shown in Fig. 5, multiple processors can be utilized according to other embodiments. Processor 22 can also include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples.

Apparatus 10 can further include a memory 14, coupled to processor 22, for storing information and instructions that can be executed by processor 22. Memory 14 can be one or more memories and of any type suitable to the local application environment, and can be implemented using any suitable volatile or nonvolatile data storage technology such as a semiconductor-based memory device, a magnetic memory device and system, an optical memory device and system, fixed memory, and removable memory. For example, memory 14 include any combination of random access memory (RAM), read only memory (ROM), static storage such as a magnetic or optical disk, or any other type of non-transitory machine or computer readable media. The instructions stored in memory 14 can include program instructions or computer program code that, when executed by processor 22, enable the apparatus 10 to perform tasks as described herein.

Apparatus 10 can also include one or more antennas (not shown) for transmitting and receiving signals and/or data to and from apparatus 10. Apparatus 10 can further include a transceiver 28 that modulates information on to a carrier waveform for transmission by the antenna(s) and demodulates information received via the antenna(s) for further processing by other elements of apparatus 10. In other embodiments, transceiver 28 can be capable of transmitting and receiving signals or data directly.

Processor 22 can perform functions associated with the operation of apparatus 10 including, without limitation, precoding of antenna gain/phase parameters, encoding and decoding of individual bits forming a communication message, formatting of information, and overall control of the apparatus 10, including processes related to management of communication resources.

In an embodiment, memory 14 can store software modules that provide functionality when executed by processor 22. The modules can include an operating system 15 that provides operating system functionality for apparatus 10. The memory can also store one or more functional modules 18, such as an application or program, to provide additional functionality for apparatus 10. The components of apparatus 10 can be implemented in hardware, or as any suitable combination of hardware and software.

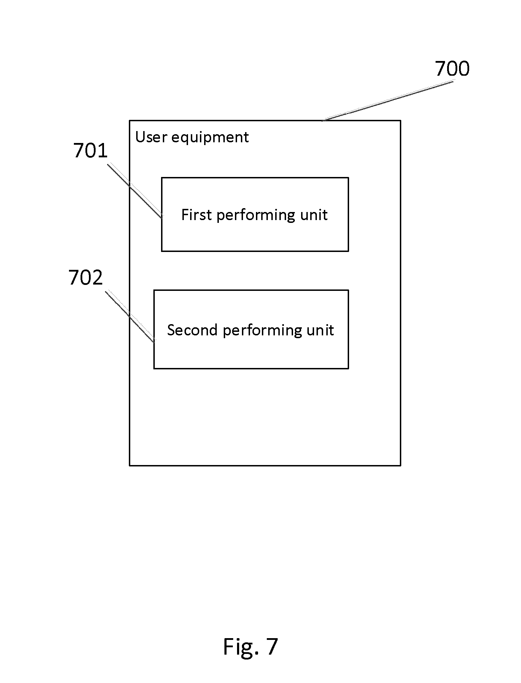

Fig. 7 illustrates an apparatus in accordance with embodiments of the invention. Apparatus 700 can be a user equipment, for example. Apparatus 700 can include a first performing unit 701 that performs discontinuous monitoring of a macro cell/MeNB. Apparatus 700 can also include a second performing unit 702 that performs monitoring of a small cell/SeNB. The monitoring of the macro cell/MeNB and the monitoring of the small cell/SeNB are performed using a time-division-multiplexing pattern. The monitoring of the macro cell/MeNB has higher priority over the monitoring of the small cell/SeNB.

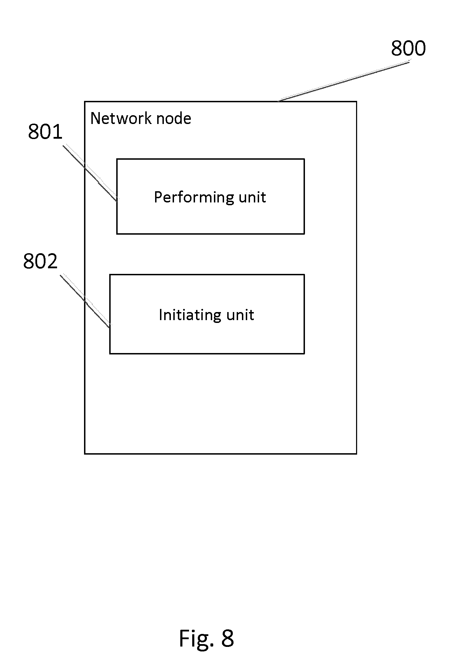

Fig. 8 illustrates an apparatus in accordance with embodiments of the invention. Apparatus 800 can be a network node, for example. Apparatus 800 can include a performing unit 801 that performs activity with a user equipment. The activity with the user equipment is performed using a time-division-multiplexing pattern. Apparatus 800 can also include an initiating unit 802 that initiates a timer. The user equipment monitors a macro cell/MeNB while the timer is running.

The described features, advantages, and characteristics of the invention can be combined in any suitable manner in one or more embodiments. One skilled in the relevant art will recognize that the invention can be practiced without one or more of the specific features or advantages of a particular embodiment. In other instances, additional features and advantages can be recognized in certain embodiments that may not be present in all embodiments of the invention. One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the spirit and scope of the invention.

## Claims

1. A method, comprising:
performing (400), by a user equipment, discontinuous monitoring of a macro cell or master eNB (102); and
performing (401), by the user equipment, monitoring of a small cell or secondary eNB (103), wherein the monitoring (400) of the macro cell or master eNB (102) and the monitoring (401) of the small cell or secondary eNB (103) are performed using a time-division-multiplexing pattern, and the monitoring (400) of the macro cell or master eNB (102) has higher priority over the monitoring of the small cell or secondary eNB (103).

2. The method according to claim 1, wherein the monitoring (400) of the macro cell or master eNB (102) comprises monitoring the macro cell or master eNB (102) to exchange control data, and the monitoring (401) of the small cell or secondary eNB (103) comprises monitoring the small cell or secondary eNB (103) to exchange user data.

3. The method according to any of claims 1-2, wherein the monitoring of the macro cell or master eNB (102) comprises monitoring based on a timer, and the monitoring continues while the timer is running.

4. The method according to any of claims 1-3, wherein the monitoring of the macro cell or master eNB (102) comprises monitoring the macro cell's or master eNB's (102) downlink-control information.

5. The method according to any of claims 1-4, wherein the monitoring of the macro cell or master eNB (102) and the monitoring of the small cell or secondary eNB (103) using the time-division-multiplexing pattern comprises receiving from the macro cell or master eNB (102) for every 6 ms out of every 80 ms.

6. An apparatus (10, 700), comprising:
means (701) for performing discontinuous monitoring of a macro cell or master eNB (102); and
means (702) for performing monitoring of a small cell or secondary eNB (103),
wherein the monitoring of the macro cell or master eNB (102) and the monitoring of the small cell or secondary eNB (103) are performed using a time-division-multiplexing pattern, and the monitoring of the macro cell or master eNB (102) has higher priority over the monitoring of the small cell or secondary eNB (103).

7. The apparatus according to claim 6, wherein the monitoring of the macro cell or master eNB (102) comprises monitoring the macro cell or master eNB (102) to exchange control data, and the monitoring of the small cell or secondary eNB (103) comprises monitoring the small cell or secondary eNB (103) to exchange user data.

8. The apparatus according to any of claims 6-7, wherein the monitoring of the the macro cell or master eNB(102) comprises monitoring based on a timer, and the monitoring continues while the timer is running.

9. The apparatus according to any of claims 6-8, wherein monitoring of the macro cell or master eNB (102) comprises monitoring the macro cell'sor master eNB's (102) downlink-control information.

10. The apparatus according to any of claims 6-9, wherein the monitoring of the macro cell or master eNB (102) and the monitoring of the small cell or secondary eNB (103) using the time-division-multiplexing pattern comprises receiving from the macro cell or master eNB (102) for every 6 ms out of every 80 ms.

11. A computer program product, embodied on a non-transitory computer readable medium, the computer program product configured to control a processor to perform a method according to any of claims 1-5.

12. A method, comprising:
performing (500), by a network node, activity with a user equipment, wherein the activity with the user equipment is performed using a time-division-multiplexing pattern; and
initiating (501) a timer, wherein the user equipment monitors a macro cell or master eNB (102) while the timer is running.

13. An apparatus (10, 800), comprising:
means (801) for performing activity with a user equipment, wherein the activity with the user equipment is performed using a time-division-multiplexing pattern; and
means (802) for initiating a timer, wherein the user equipment monitors a macro cell or master eNB (102) while the timer is running.

14. A computer program product, embodied on a non-transitory computer readable medium, the computer program product configured to control a processor to perform a process a method of claim 12.
